# EUROPEAN PATENT APPLICATION

(11) **EP 4 748 233 A1**
(43) Date of publication of application: **27.05.2026**
(21) Application number: 25214707.9
(22) Date of filing: 10.11.2025
(51) Int. Cl.: A23B 2/00, A23B 2/44, A23B 2/46, A23B 11/133, A23L 2/00

(54) **ARRANGEMENT AND METHOD FOR PROCESSING A FOOD PRODUCT**

(30) Priority: 21.11.2024 EP 24214516
(71) Applicant: Tetra Laval Holdings & Finance S.A., 1009 Pully (CH)
(72) Inventor: Leufstedt, Max, 221 86 Lund (SE); Arnfjärd, Kaj, 221 86 Lund (SE)
(74) Representative: Tetra Pak Patent Attorneys

(57) **Abstract**

An arrangement (100) for processing a food product (P) comprises a heat treatment unit (10), a processing unit (20), a valve system (30) configured to fluidly connect the processing unit (20) to the heat treatment unit (10). The valve system (30) includes a non-aseptic inlet (32), a non-aseptic outlet (34), an aseptic inlet (36), an aseptic outlet (38), a processing outlet (22), and a processing inlet (24). A control unit (40) is configured to control the valve system (30) to operate in a first operational mode (O1), in which the product (P) is passed through the heat treatment unit (10) prior to being passed to the processing unit (20), and a second operational mode (O2), in which the product (P) is passed through the processing unit (20) prior to being passed to the heat treatment unit (10).

## Description

### Technical Field

The invention relates to an arrangement for processing a food product. It further relates to a corresponding method for processing a food product.

### Background

Food products, such as dairy products (e.g., raw milk), go through various processes. One example of such processes is a pasteurization process that reduces or eliminates microorganisms in the raw milk. Another example is a homogenization process, which reduces the size of fat globules in milk and distributes them uniformly. When a food product needs to undergo different processes, the corresponding processing units must be connected to each other. For instance, in the examples above, a pasteurizer needs to be connected to a homogenizer.

Traditionally, processing units are connected manually using a pipe system, which may include components such as pipe bends and valves, by an operator. This traditional approach has several drawbacks. For example, it is error-prone, inefficient, and potentially unsafe, as it may expose operators to injury risks. Another drawback is that the pipe system requires extensive cleaning after each connection. Therefore, there is a need for an improved connection system and a corresponding method to address these challenges.

### Summary

It is an object of the invention to at least partly overcome one or more of the above-identified limitations of the prior art. In particular, it is an object of the invention to provide an arrangement for processing a food product that can be controlled in a flexible, automated, and user-friendly manner. It is another object of the invention to provide an arrangement that requires less cleaning and that can be used more efficiently and cost-effectively. It is yet another object of the invention to provide a corresponding method for processing a food product.

To address these objects, and according to a first aspect of the invention, an arrangement for processing a food product is provided. The arrangement comprises a heat treatment unit configured to heat treat the food product. It further comprises a processing unit configured to process the food product. The arrangement also includes a valve system configured to fluidly connect the processing unit to the heat treatment unit. The valve system comprises a non-aseptic inlet configured to receive the food product, a non-aseptic outlet configured to be arranged upstream of the heat treatment unit to pass the food product to the heat treatment unit, an aseptic inlet configured to be arranged downstream of the heat treatment unit to receive the food product from the heat treatment unit, an aseptic outlet configured to output the food product, a processing outlet configured to be arranged upstream of the processing unit to pass the food product to the processing unit, and a processing inlet configured to be arranged downstream of the processing unit to receive the food product from the processing unit. The arrangement further comprises a control unit configured to control the valve system to pass the product through the heat treatment unit prior to the processing unit in a first operational mode and through the processing unit prior to the heat treatment unit in a second operational mode.

The heat treatment allows for eliminating harmful microorganisms in the food product while maintaining its nutritional value. The heat treatment unit processes a non-aseptic food product to obtain an aseptic food product. It may directly heat the non-aseptic food product (e.g., by direct heating) or indirectly heat the food product (e.g., using tubular or plate heat exchangers to transfer heat across an interface in contact with the food product). Examples of heat treatment units include pasteurizers, sterilizers, and heat exchangers.

The processing unit is configured to process the food product, thereby allowing various operations. Examples of processing units include homogenizers, separators, mixers, blenders, evaporators, dryers, and fermenters.

The valve system fluidly connects the processing unit to the heat treatment unit, allowing the food product to flow between the two units. The non-aseptic inlet receives the food product, for example, from a storage unit. The non-aseptic outlet passes the food product to the heat treatment unit, while the aseptic inlet receives the product from the heat treatment unit. The aseptic outlet outputs the food product, for example, to another storage unit. The processing outlet passes the food product to the processing unit, while the processing inlet receives the food product from the processing unit.

The control unit enables flexible operation of the arrangement. In the first operational mode, the product passes through the heat treatment unit before the processing unit, enabling aseptic operation by sterilizing the food product before processing. In the second operational mode, the product passes through the processing unit before the heat treatment unit, enabling non-aseptic operation.

This dual-mode capability offers significant advantages. By enabling aseptic and non-aseptic operations, the arrangement can operate flexibly, efficiently, and safely. Automation eliminates the need for manual pipe adjustments, reducing the risk of operator injuries (e.g., burns). Additionally, the automated design minimizes downtime compared to conventional systems, enhancing efficiency and cost-effectiveness.

The arrangement is advantageous in that it requires less decontamination compared to the conventional approach. Specifically, the arrangement operates both aseptically and non-aseptically, eliminating the need to disconnect the valve system when switching between the first operational mode and the second operational mode. As a result, the arrangement does not require any clean-in-place (CIP) process, which would typically be necessary after disconnecting the valve system. Furthermore, transitioning from the first operational mode (aseptic operation) to the second operational mode (non-aseptic operation) does not require a sterilization process. When transitioning from the second operational mode to the first operational mode, the arrangement only requires a sterilization process, which may be performed using water alone, i.e., without chemicals. This design reduces the need for decontamination and sterilization processes compared to conventional systems, making the arrangement more efficient, user-friendly, environmentally friendly, and cost-effective.

The control unit may be configured to control the valve system so that the non-aseptic inlet is arranged upstream of the non-aseptic outlet, the aseptic inlet is arranged upstream of the processing outlet, and the aseptic outlet is arranged downstream of the processing inlet. This configuration enables the first operational mode, allowing the product to pass through the heat treatment unit before passing to the processing unit. In this mode, the food product becomes aseptic before being processed, supporting aseptic operation of the arrangement.

The control unit may also be configured to control the valve system so that the non-aseptic inlet is arranged upstream of the processing outlet, the non-aseptic outlet is arranged downstream of the processing inlet, and the aseptic inlet is arranged upstream of the aseptic outlet. This configuration enables the second operational mode, allowing the product to pass through the processing unit before passing to the heat treatment unit. In this mode, the food product remains non-aseptic while being processed, supporting non-aseptic operation of the arrangement.

The control unit may further be configured to control the valve system to pass the product through the heat treatment unit while bypassing the processing unit in a third operational mode. This "bypass mode" is useful when the food product does not require processing, as it only passes through the heat treatment unit. For example, this mode may be desired when processing non-dairy products such as beverages (e.g., juice). In this mode, the control unit may arrange the non-aseptic inlet upstream of the non-aseptic outlet and the aseptic inlet upstream of the aseptic outlet. This configuration ensures that the food product bypasses the processing unit entirely while passing through the heat treatment unit.

The valve system may comprise a first valve component, a second valve component, a third valve component, and a fourth valve component. However, the number of valve components in the valve system may vary; it does not necessarily need to comprise four valve components. The valve components may be similar to one another, but they are not required to be identical. Each valve component may include multiple valves, such as one-way or two-way valves.

The term "valve component" refers to a mechanical valve that can open, close, select a flow path, and control or regulate the flow of the food product through the selected path. A "one-way valve" refers to a valve with a single path for the food product, configured to open, close, and regulate flow. A "two-way valve" refers to a valve with two paths for the food product; a first path and a second path. A two-way valve may be configured to open, close, select between the two paths, and regulate flow through the selected path.

The control unit may regulate the first valve component to a first position, arranging the non-aseptic inlet upstream of the processing outlet, or to a second position, arranging the non-aseptic inlet upstream of the non-aseptic outlet. The first position corresponds to a path that supports non-aseptic operation of the arrangement, while the second position corresponds to a path supporting aseptic operation. The first valve component may also prevent leakage of the food product between non-aseptic and aseptic operations, ensuring contamination is avoided. This functionality supports automated, safe, reliable, and user-friendly operation of the arrangement.

The first valve component may comprise a plurality of valves, such as seat valves. The first valve component may comprise at least one multi-port valve. The control unit may be configured to regulate the multi-port valve to a first position to arrange the non-aseptic inlet upstream of the processing outlet, or a second position to arrange the non-aseptic inlet upstream of the non-aseptic outlet. For example, the first valve component may comprise three shut-off valves and one change-over valve. Alternatively, the first valve component may comprise two shut-off valves and a mixproof valve.

The control unit may be configured to regulate the third valve component to a first position to arrange the aseptic inlet upstream of the processing outlet, or a second position to arrange the aseptic inlet upstream of the aseptic outlet. The first position may correspond to a first path for the food product to pass through, which in turn may correspond to the aseptic operation of the arrangement. The second position may correspond to a second path for the food product to pass through, which in turn may correspond to the non-aseptic operation. The third valve component may allow for preventing a leakage of the food product from the non-aseptic operation to the aseptic operation. This may, in turn, prevent any contamination of the food product in an automated, safe, reliable, and user-friendly manner.

The third valve component may comprise a plurality of valves, such as seat valves. The third valve component may comprise at least one multi-port valve. The control unit may be configured to regulate the multi-port valve to a first position to arrange the aseptic inlet upstream of the processing outlet, or a second position to arrange the aseptic inlet upstream of the aseptic outlet. For example, the third valve component may comprise three shut-off valves and one change-over valve. Alternatively, the third valve component may comprise two shut-off valves and a mixproof valve.

The control unit may be configured to regulate the second valve component to a first position to arrange the non-aseptic outlet downstream of the processing inlet, or a second position to arrange the non-aseptic outlet downstream of the non-aseptic inlet. The first position may correspond to a first path for the food product to pass through, which in turn may correspond to the non-aseptic operation of the arrangement. The second position may correspond to a second path for the food product to pass through, which in turn may correspond to the aseptic operation. The second valve component may allow for preventing a leakage of the food product from the non-aseptic operation to the aseptic operation. This may, in turn, prevent any contamination of the food product in an automated, safe, reliable, and user-friendly manner.

The second valve component may comprise a plurality of valves, such as seat valves. The second valve component may comprise at least one multi-port valve. The control unit may be configured to regulate the multi-port valve to a first position to arrange the non-aseptic outlet downstream of the processing inlet, or a second position to arrange the non-aseptic outlet downstream of the non-aseptic inlet. For example, the second valve component may comprise three shut-off valves and one change-over valve. Alternatively, the second valve component may comprise two shut-off valves and a mixproof valve.

The control unit may be configured to regulate the fourth valve component to a first position to arrange the aseptic outlet downstream of the processing inlet, or a second position to arrange the aseptic outlet downstream of the aseptic inlet. The first position may correspond to a first path for the food product to pass through, which in turn may correspond to the aseptic operation of the arrangement. The second position may correspond to a second path for the food product to pass through, which in turn may correspond to the non-aseptic operation. The fourth valve component may allow for preventing a leakage of the food product from the non-aseptic operation to the aseptic operation. This may, in turn, prevent any contamination of the food product in an automated, safe, reliable, and user-friendly manner.

The fourth valve component may comprise a plurality of valves, such as seat valves. The fourth valve component may comprise at least one multi-port valve. The control unit may be configured to regulate the multi-port valve to a first position to arrange the non-aseptic outlet downstream of the processing inlet, or a second position to arrange the non-aseptic outlet downstream of the non-aseptic inlet. For example, the fourth valve component may comprise three shut-off valves and one change-over valve. Alternatively, the fourth valve component may comprise two shut-off valves and a mixproof valve.

Each of the first valve component, the second valve component, the third valve component, and the fourth valve component may comprise a multi-port valve. The control unit may be configured to regulate the multi-port valve of the respective valve component to the first position or the second position. The multi-port valve may allow for no, or at least a minimum, risk of contamination of the food product. The multi-port valve may enhance product yield, enable spillage-free operation, and improve cleanability of the valve components. The multi-port valve may contribute to an improved arrangement in terms of safety, reliability, cleanability, and cost-effectiveness. The multi-port valve may be a seat valve and may be controlled by seat lifting to the first position or the second position. The multi-port valve may comprise a barrier chamber or a separation layer to separate the second position from the first position. Examples of the multi-port valve include change-over valves or mixproof valves sold by Alfa Laval.

The control unit may be configured to regulate the multi-port valve of the first valve component to the first position to arrange the non-aseptic inlet upstream of the processing outlet, or to the second position to arrange the non-aseptic inlet upstream of the non-aseptic outlet.

The control unit may be configured to regulate the multi-port valve of the third valve component to the first position, arranging the aseptic inlet upstream of the processing outlet, or to the second position, arranging the aseptic inlet upstream of the aseptic outlet.

The control unit may be configured to regulate the multi-port valve of the second valve component to the first position, arranging the non-aseptic outlet downstream of the processing inlet, or to the second position, arranging the non-aseptic outlet downstream of the non-aseptic inlet.

The control unit may be configured to regulate the multi-port valve of the fourth valve component to the first position, arranging the aseptic outlet downstream of the processing inlet, or to the second position, arranging the aseptic outlet downstream of the aseptic inlet.

Each of the first valve component, the second valve component, the third valve component, and the fourth valve component may comprise a steam valve. Each steam valve may be configured to feed steam into the respective multi-port valve to prevent any leakage of the food product when the respective multi-port valve is in the second position. The barrier chamber of the multi-port valve may use steam and act as a steam barrier chamber or a steam separation layer to separate the aseptic operation from the non-aseptic operation. This, in turn, may prevent any contamination of the food product in an automated, safe, reliable, and user-friendly manner. The control unit may be configured to regulate the steam valve to inject or feed steam into the respective multi-port valve.

Each of the first valve component, the second valve component, the third valve component, and the fourth valve component may also comprise a condensate valve. Each condensate valve may be configured to condense steam exiting the respective valve component. The control unit may be configured to regulate the condensate valve to condense the steam exiting the respective valve component. The condensate valve may ensure optimal operation of the respective valve component and prevent potential issues, such as corrosion.

According to a second aspect of the invention, a method for processing a food product by an arrangement is provided. The method comprises the step of receiving the product via a non-aseptic inlet of a valve system in the arrangement. The valve system is configured to fluidly connect a processing unit of the arrangement to a heat treatment unit of the arrangement. The method includes the step of controlling the valve system via a control unit of the arrangement. The method further includes the step of passing, in a first operational mode, the product through the heat treatment unit to heat treat the food product, prior to passing the product to the processing unit to process the product. Additionally, the method includes the step of passing, in a second operational mode, the product through the processing unit to process the product prior to passing the product to the heat treatment unit to heat treat the product. The method concludes with the step of outputting the product via an aseptic outlet of the valve arrangement.

This aspect may generally present the same or corresponding advantages as defined above in relation to the first aspect of the invention. The method may be performed using the arrangement as defined above in relation to the first aspect of the invention. The step of controlling the valve system may include the steps of passing in the first operational mode and passing in the second operational mode.

The step of passing, in the first operational mode, the product through the heat treatment unit prior to passing the product to the processing unit may comprise controlling the valve system such that the non-aseptic inlet is arranged upstream of a non-aseptic outlet of the valve system, the aseptic inlet is arranged upstream of a processing outlet of the valve system, and the aseptic outlet is arranged downstream of a processing inlet of the valve system. This may, in turn, allow for the aseptic operation of the arrangement, as the food product becomes aseptic prior to passing through the processing unit. The control of the valve system may be performed by the control unit.

The step of passing, in the second operational mode, the product through the processing unit prior to passing the product to the heat treatment unit may comprise controlling the valve system such that the non-aseptic inlet is arranged upstream of the processing outlet, the non-aseptic outlet is arranged downstream of the processing inlet, and the aseptic inlet is arranged upstream of the aseptic outlet. This may, in turn, allow for the non-aseptic operation of the arrangement, as the food product is non-aseptic when passing through the processing unit. The control of the valve system may be performed by the control unit.

Still other objectives, features, aspects, and advantages of the invention will appear from the following detailed description as well as from the drawings.

### Drawings

Embodiments of the invention will now be described, by way of example, with reference to the accompanying schematic drawings, in which:
Fig. 1 illustrates a schematic view of an arrangement for processing a food product.
Fig. 2 illustrates an aseptic operation of the arrangement shown in Fig. 1.
Fig. 3 illustrates a non-aseptic operation of the arrangement shown in Fig. 1.
Fig. 4 illustrates a by-pass operation of the arrangement shown in Fig. 1.
Fig. 5 illustrates a schematic representation of a method for processing a food product.

### Description

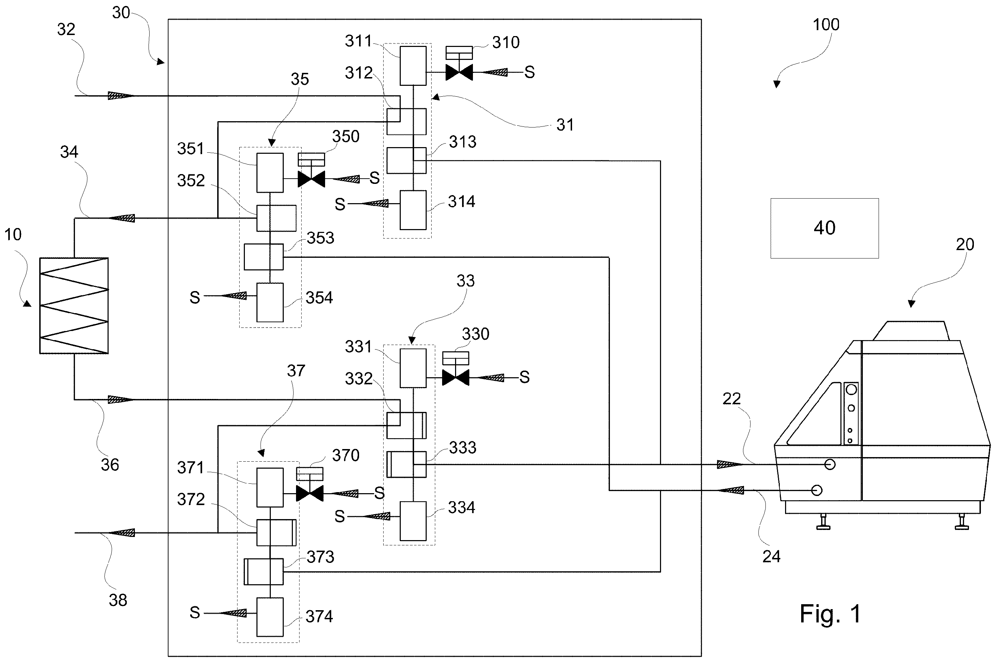

With reference to Fig. 1, an arrangement 100 for processing a food product P is illustrated. The food product may be a liquid food product, such as a dairy product (e.g., milk or cream) or a non-dairy product (e.g., juice or another beverage). The arrangement 100 comprises a heat treatment unit 10, configured to heat treat the food product P. The heat treatment unit 10 may directly heat treat the non-aseptic food product by heating the product P, for example, by applying steam to the product P to heat it. Direct heat treatment may be performed at a temperature of 140°C for 2 seconds. Alternatively, the heat treatment unit 10 may indirectly heat treat the non-aseptic food product. For instance, the heat treatment unit 10 may include tubular and plate heat exchangers to transfer heat across an interface in contact with the product P. Indirect heat treatment may be performed at a temperature of 138°C for 4 seconds.

The arrangement 100 also comprises a processing unit 20, configured to process the product P. The processing unit 20 may be any suitable unit conventionally used for processing food products. For example, the processing unit 20 may be a homogenizer. When milk is the food product P, the homogenizer may reduce the size of fat globules in the milk and distribute them uniformly. The arrangement 100 further comprises a control unit 40, which may be a conventional control unit operated by an operator.

The valve system 30 is configured to fluidly connect the processing unit 20 to the heat treatment unit 10. The valve system 30 includes a non-aseptic inlet 32, configured to receive the food product P, and a non-aseptic outlet 34, configured to be arranged upstream of the heat treatment unit 10 to pass the food product P to the heat treatment unit 10. The valve system 30 also includes an aseptic inlet 36, configured to be arranged downstream of the heat treatment unit 10 to receive the food product P from the heat treatment unit 10, and an aseptic outlet 38, configured to output the food product P. Additionally, the valve system 30 includes a processing outlet 22, arranged upstream of the processing unit 20 to pass the food product P to the processing unit 20, and a processing inlet 24, arranged downstream of the processing unit 20 to receive the food product P from the processing unit 20.

Still with reference to Fig. 1, the valve system 30 may comprise a first valve component 31, a second valve component 35, a third valve component 33, and a fourth valve component 37. The control unit 40 may regulate the first valve component 31 to a first position, arranging the non-aseptic inlet 32 upstream of the processing outlet 22, or to a second position, arranging the non-aseptic inlet 32 upstream of the non-aseptic outlet 34. Similarly, the control unit 40 may regulate the third valve component 33 to a first position, arranging the aseptic inlet 36 upstream of the processing outlet 22, or to a second position, arranging the aseptic inlet 36 upstream of the aseptic outlet 38. The control unit 40 may regulate the second valve component 35 to a first position, arranging the non-aseptic outlet 34 downstream of the processing inlet 24, or to a second position, arranging the non-aseptic outlet 34 downstream of the non-aseptic inlet 32. The control unit 40 may also regulate the fourth valve component 37 to a first position, arranging the aseptic outlet 38 downstream of the processing inlet 24, or to a second position, arranging the aseptic outlet 38 downstream of the aseptic inlet 36.

Still with reference to Fig. 1, each of the first valve component 31, the second valve component 35, the third valve component 33, and the fourth valve component 37 may comprise a multi-port valve 312, 332, 352, 372. The control unit 40 may regulate the multi-port valve 312, 332, 352, 372 of each respective valve component 31, 33, 35, 37 to the first or second position. Additionally, each valve component may comprise a plurality of valves. For example, the first valve component 31 may include four valves 311, 312, 313, 314, with the multi-port valve 312 potentially being a change-over valve and the remaining three valves (311, 313, 314) being shut-off valves. Alternatively, valves 312 and 313 could be replaced by a mixproof valve.

Similarly, the second valve component 35 may include four valves 351, 352, 353, 354, with the multi-port valve 352 serving as a change-over valve and the remaining three valves (351, 353, 354) being shut-off valves. Alternatively, valves 352 and 353 could be replaced by a mixproof valve.

The third valve component 33 may include four valves 331, 332, 333, 334, with the multi-port valve 332 serving as a change-over valve and the remaining three valves (331, 333, 334) being shut-off valves. Alternatively, valves 332 and 333 could be replaced by a mixproof valve.

The fourth valve component 37 may include four valves 371, 372, 373, 374, with the multi-port valve 372 serving as a change-over valve and the remaining three valves (371, 373, 374) being shut-off valves. Alternatively, valves 372 and 373 could be replaced by a mixproof valve.

Still with reference to Fig. 1, each of the first valve component 31, the second valve component 35, the third valve component 33, and the fourth valve component 37 may comprise a steam valve 310, 330, 350, 370. Each steam valve 310, 330, 350, 370 may be configured to feed steam into the respective multi-port valve 312, 332, 352, 372 to prevent any leakage of the food product P when the respective multi-port valve 312, 332, 352, 372 is in the second position. Additionally, each of the first valve component 31, the second valve component 35, the third valve component 33, and the fourth valve component 37 may comprise a condensate valve (not shown). Each condensate valve may be configured to condense steam exiting the respective valve component 31, 33, 35, 37. The control unit 40 may be configured to regulate the condensate valve to condense the steam exiting the respective valve component 31, 33, 35, 37.

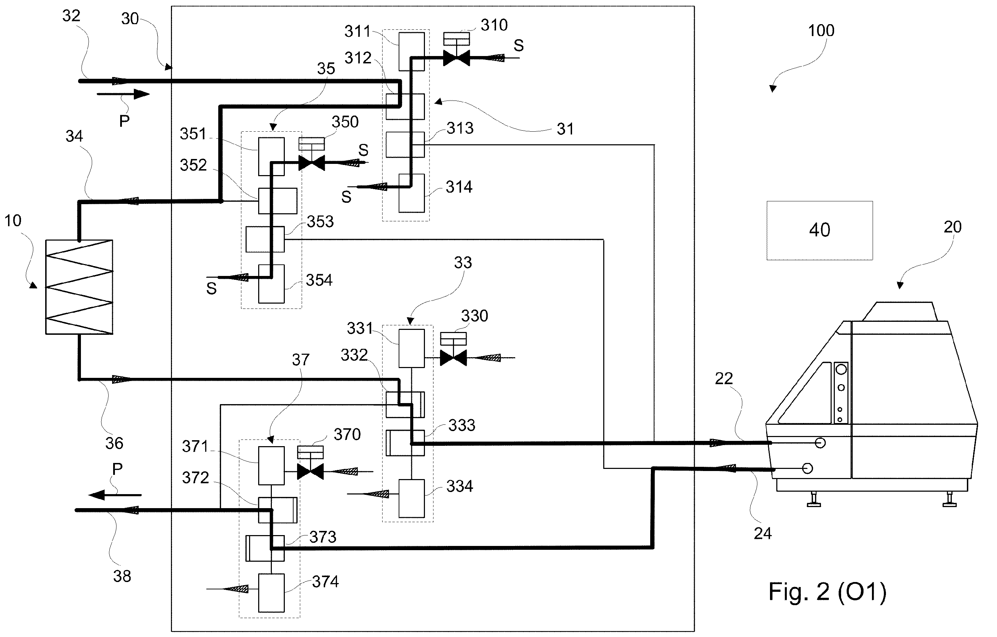

With reference to Fig. 2, the control unit 40 is configured to control the valve system 30 to pass, in a first operational mode O1, the product P through the heat treatment unit 10 prior to passing the product P to the processing unit 20. The control unit 40 may control the valve system 30 such that the non-aseptic inlet 32 is arranged upstream of the non-aseptic outlet 34. Additionally, the control unit 40 may arrange the aseptic inlet 36 upstream of the processing outlet 22 and the aseptic outlet 38 downstream of the processing inlet 24. This configuration ensures the product P passes through the heat treatment unit 10 before reaching the processing unit 20. Furthermore, the control unit 40 may regulate the valve components 31, 33, 35, 37 of the valve system 30, setting the first valve component 31 to the second position, the second valve component 35 to the second position, the third valve component 33 to the first position, and the fourth valve component 37 to the first position.

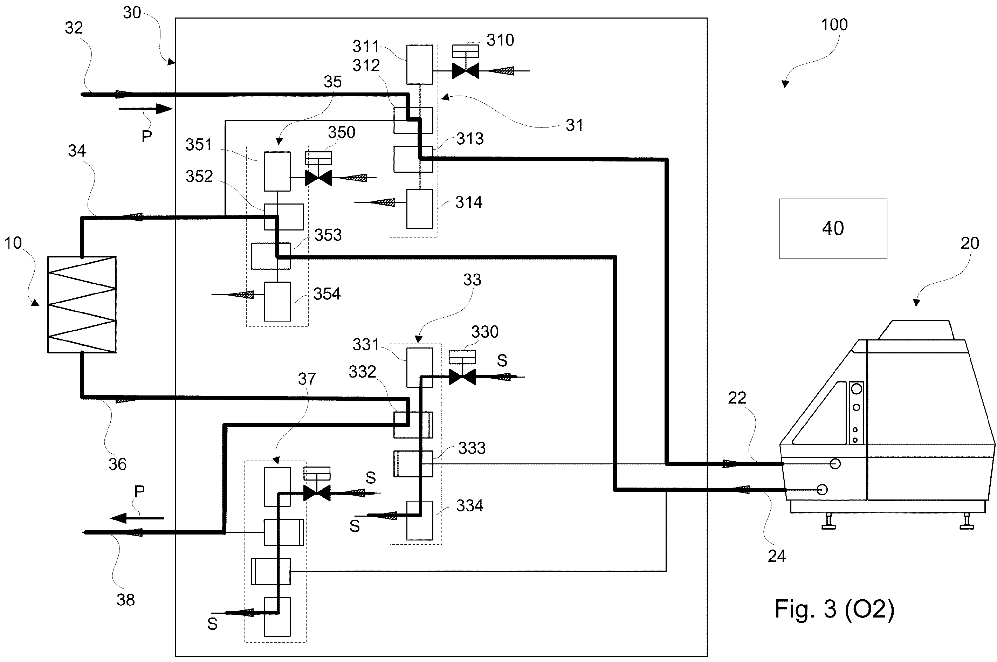

With reference to Fig. 3, the control unit 40 is configured to pass, in a second operational mode O2, the product P through the processing unit 20 prior to passing the product P to the heat treatment unit 10. The control unit 40 may control the valve system 30 such that the non-aseptic inlet 32 is arranged upstream of the processing outlet 22, the non-aseptic outlet 34 is arranged downstream of the processing inlet 24, and the aseptic inlet 36 is arranged upstream of the aseptic outlet 38. This configuration ensures the product P passes through the processing unit 20 before being routed to the heat treatment unit 10. The control unit 40 may regulate the valve components 31, 33, 35, 37 of the valve system 30, setting the first valve component 31 to the first position, the second valve component 35 to the first position, the third valve component 33 to the second position, and the fourth valve component 37 to the second position.

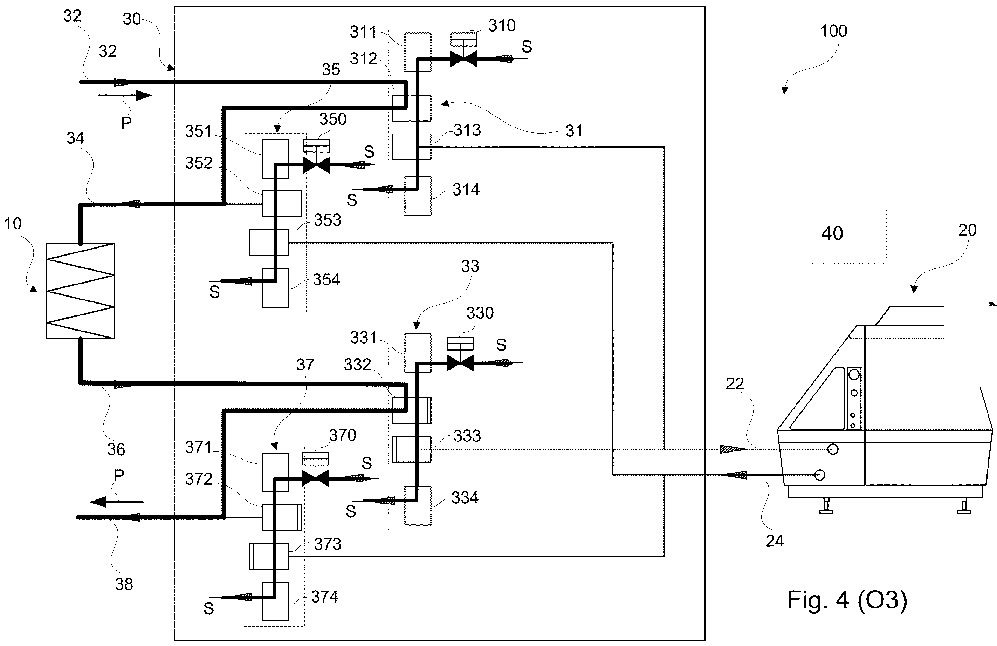

With reference to Fig. 4, the control unit 40 is configured to control the valve system 30 to pass, in a third operational mode O3, the product P through the heat treatment unit 10 while bypassing the processing unit 20. The control unit 40 may control the valve system 30 such that the non-aseptic inlet 32 is arranged upstream of the non-aseptic outlet 34 and the aseptic inlet 36 is arranged upstream of the aseptic outlet 38. This configuration allows the product P to pass exclusively through the heat treatment unit 10. Additionally, the control unit 40 may regulate the valve components 31, 33, 35, 37 of the valve system 30, setting the first valve component 31 to the second position, the second valve component 35 to the second position, the third valve component 33 to the second position, and the fourth valve component 37 to the second position.

Fig. 4 also illustrates the status of the arrangement 100 when the operational mode switches from the first operational mode O1 to the second operational mode O2. During this transition, the valve system 30 may momentarily be in the third operational mode O3. For the bypass operation, the valve system 30 may remain in the third operational mode O3 for a relatively short period of time.

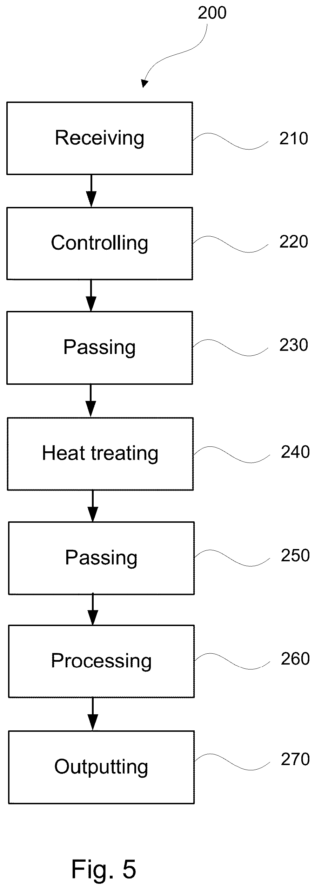

With reference to Fig. 5, a schematic illustration of a method 200 for processing a food product P by an arrangement 100 is shown. The method 200 comprises the step of receiving 210 the product P via a non-aseptic inlet 32 of a valve system 30 within the arrangement 100. The valve system 30 is configured to fluidly connect a processing unit 20 of the arrangement 100 to a heat treatment unit 10 of the arrangement 100.

The method 200 includes the step of controlling 220 the valve system 30 via a control unit 40 of the arrangement 100. The method 200 further comprises the step of passing 230, in a first operational mode O1, the product P through the heat treatment unit 10 to heat treat 240 the product P prior to passing 250 the product P to the processing unit 20 to process 260 the product P. Additionally, the method 200 includes the step of passing 250, in a second operational mode O2, the product P through the processing unit 20 to process 260 the product P prior to passing 230 the product P to the heat treatment unit 10 to heat treat 240 the product P. Finally, the method 200 comprises the step of outputting 270 the product P via an aseptic outlet 38 of the valve system 30.

The step of passing 230, in the first operational mode O1, the product P through the heat treatment unit 10 prior to passing 250 the product P to the processing unit 20 may involve controlling 220 the valve system 30 such that the non-aseptic inlet 32 is arranged upstream of a non-aseptic outlet 34 of the valve system 30. It may also involve controlling 220 the valve system 30 such that an aseptic inlet 36 is arranged upstream of a processing outlet 22 of the valve system 30, and the aseptic outlet 38 is arranged downstream of a processing inlet 24 of the valve system 30.

The step of passing 250, in the second operational mode O2, the product P through the processing unit 20 prior to passing 230 the product P to the heat treatment unit 10 may involve controlling 220 the valve system 30 such that the non-aseptic inlet 32 is arranged upstream of the processing outlet 22. It may also involve controlling 220 the valve system 30 such that the non-aseptic outlet 34 is arranged downstream of the processing inlet 24, and the aseptic inlet 36 is arranged upstream of the aseptic outlet 38.

From the description above, it follows that although various embodiments of the invention have been described and illustrated, the invention is not limited to these embodiments and may also be implemented in other ways within the scope of the subject matter defined in the following claims.

## Claims

1. An arrangement (100) for processing a food product (P) comprising:
a heat treatment unit (10) configured to heat treat the food product (P),
a processing unit (20) configured to process the food product (P),
a valve system (30) configured to fluidly connect the processing unit (20) to the heat treatment unit (10), the valve system (30) comprising:
- a non-aseptic inlet (32) configured to receive the food product (P),
- a non-aseptic outlet (34) configured to be arranged upstream the heat treatment unit (10) to pass the food product (P) to the heat treatment unit (10),
- an aseptic inlet (36) configured to be arranged downstream the heat treatment unit (10) to receive the food product (P) from the heat treatment unit (10),
- an aseptic outlet (38) configured to output the food product (P),
- a processing outlet (22) configured to be arranged upstream the processing unit (20) to pass the food product (P) to the processing unit (20), and
- a processing inlet (24) configured to be arranged downstream the processing unit (20) to receive the food product (P) from the processing unit (20), and
a control unit (40) configured to control the valve system (30) to
- pass, in a first operational mode (O1), the product (P) through the heat treatment unit (10) prior to passing the product (P) to the processing unit (20), and
- pass, in a second operational mode (O2), the product (P) through the processing unit (20) prior to passing the product (P) to the to the heat treatment unit (10).

2. The arrangement (100) according to claim 1, wherein the control unit (40) is configured to control the valve system (30) such that
the non-aseptic inlet (32) is arranged upstream of the non-aseptic outlet (34),
the aseptic inlet (36) is arranged upstream of the processing outlet (22), and
the aseptic outlet (38) is arranged downstream of the processing inlet (24), to pass, in the first operational mode (O1), the product (P) through the heat treatment unit (10) prior to passing the product (P) to the processing unit (20).

3. The arrangement (100) according to claim 1 or claim 2, wherein the control unit (40) is configured to control the valve system (30) such that
the non-aseptic inlet (32) is arranged upstream of the processing outlet (22),
the non-aseptic outlet (34) is arranged downstream of the processing inlet (24), and
the aseptic inlet (36) is arranged upstream of the aseptic outlet (38), to pass, in the second operational mode (O2), the product (P) through the processing unit (20) prior to passing the product (P) to the heat treatment unit (10).

4. The arrangement (100) according to any preceding claim, wherein the control unit (40) is configured to control the valve system (30) to pass, in a third operational mode (O3), the product (P) through the heat treatment unit (10) and bypass the processing unit (20).

5. The arrangement (100) according to claim 4, wherein the control unit (40) is configured to control the valve system (30) such that
the non-aseptic inlet (32) is arranged upstream of the non-aseptic outlet (34), and
the aseptic inlet (36) is arranged upstream of the aseptic outlet (38), to pass, in the third operational mode (O3), the product (P) through the heat treatment unit (10) and bypass the processing unit (20).

6. The arrangement (100) according to any preceding claim, wherein the valve system (30) comprises a first valve component (31), a second valve component (35), a third valve component (33), and a fourth valve component (37).

7. The arrangement (100) according to claim 6, wherein the control unit (40) is configured to regulate the first valve component (31)
to a first position to arrange the non-aseptic inlet (32) upstream of the processing outlet (22), or
a second position to arrange the non-aseptic inlet (32) upstream of the non-aseptic outlet (34).

8. The arrangement (100) according to claim 6 or claim 7, wherein the control unit (40) is configured to
regulate the third valve component (33)
to a first position to arrange the aseptic inlet (36) upstream of the processing outlet (22), or
a second position to arrange the aseptic inlet (36) upstream of the aseptic outlet (38).

9. The arrangement (100) according to any of claims 6 to 8, wherein the control unit (40) is configured to regulate the second valve component (35) to
a first position to arrange the non-aseptic outlet (34) downstream of the processing inlet (24), or
a second position to arrange the non-aseptic outlet (34) downstream of the non-aseptic inlet (32).

10. The arrangement (100) according to any of claims 6 to 9, wherein the control unit (40) is configured to regulate the fourth valve component (37) to
a first position to arrange the aseptic outlet (38) downstream of the processing inlet (24), or
a second position to arrange the aseptic outlet (38) downstream of the aseptic inlet (36).

11. The arrangement (100) according to any of claims 6 to 10, wherein each of the first valve component (31), the second valve component (35), the third valve component (33), and the fourth valve component (37) comprises a multi-port valve (312, 332, 352, 372), wherein
the control unit (40) is configured to regulate the multi-port valve (312, 332, 352, 372) of the respective valve component (31, 33, 35, 37) to the first position or the second position.

12. The arrangement (100) according to claim 11, wherein each of the first valve component (31), the second valve component (35), the third valve component (33), and the fourth valve component (37) comprises a steam valve (310, 330, 350, 370), wherein
each steam valve (310, 330, 350, 370) is configured to feed steam into the respective multi-port valve (312, 332, 352, 372) to prevent any leakage of the food product (P) when the respective multi-port valve (312, 332, 352, 372) is in the second position.

13. A method (200) for processing a food product (P) by an arrangement (100), comprising the steps of:
receiving (210) the product (P) via a non-aseptic inlet (32) of a valve system (30) of the arrangement (100), the valve system (30) being configured to fluidly connect a processing unit (20) of the arrangement (100) to a heat treatment unit (10) of the arrangement (100),
controlling (220) the valve system (30) via a control unit (40) of the arrangement (100),
passing (230), in a first operational mode (O1), the product (P) through the heat treatment unit (10) to heat treat (240) the product (P), prior to passing (250) the product (P) to the processing unit (20) to process (260) the product (P),
passing (250), in a second operational mode (O2), the product (P) through the processing unit (20) to process (260) the product (P) prior to passing (230) the product (P) to the heat treatment unit (10) to heat treat (240) the product (P), and
outputting (270) the product (P) via an aseptic outlet (38) of the valve arrangement (30).

14. The method (200) according to claim 13, wherein the step of passing (230), in the first operational mode (O1), the product (P) through the heat treatment unit (10) prior to passing (250) the product (P) to the processing unit (20) comprises controlling (220) the valve system (30) such that
the non-aseptic inlet (32) becomes arranged upstream of the non-aseptic outlet (34) of the valve system (30),
the aseptic inlet (36) becomes arranged upstream of the processing outlet (22) of the valve system (30), and
the aseptic outlet (38) becomes arranged downstream of the processing inlet (24) of the valve system (30).

15. The method (200) according to claim 13 or claim 14, wherein the step of passing (250), in the second operational mode (O2), the product (P) through the processing unit (20) prior to passing (230) the product (P) to the heat treatment unit (10) comprises controlling (220) the valve system (30) such that
the non-aseptic inlet (32) becomes arranged upstream of the processing outlet (22),
the non-aseptic outlet (34) becomes arranged downstream of the processing inlet (24), and
the aseptic inlet (36) becomes arranged upstream of the aseptic outlet (38).
